# FASCICULE DE BREVET EUROPEEN

(11) **EP 0 609 256 B1**
(45) Date de publication et mention de la délivrance du brevet: **05.06.1996**
(21) Numéro de dépôt: 92920647.2
(22) Date de dépôt: 07.09.1992
(51) Int. Cl.: A01B 61/04

(54) **SECURITE POUR CORPS SYMETRIQUE DE CHARRUE**
SICHERUNG FÜR SYMMETRISCHE PFLUGKÖRPER
SAFETY SYSTEM FOR A SYMMETRICAL PLOUGH BASE

(30) Priorité: 05.09.1991 FR 9110968
(43) Date de publication de la demande: 10.08.1994
(73) Titulaire: COSTE, Jean-Louis, F-77400 S. Thibault-des-Vignes (FR)
(72) Inventeur: COSTE, Jean-Louis, F-77400 S. Thibault-des-Vignes (FR)
(86) Numéro de dépôt international: FR9200847
(87) Numéro de publication internationale: WO9304573

(56) Documents cités:
- EP-A- 0 171 861
- WO-A-88/01129
- DE-A- 2 743 157
- FR-A- 2 432 823
- FR-A- 2 440 140
- GB-A- 1 253 937
- GB-A- 1 386 454
- GB-A- 2 125 663

## Description

La présente invention concerne un système de sécurité pour corps de charrue à corps symétrique ou non permettant à ce dernier d'échapper les obstacles qu'il rencontre.

On définit dans ce texte:
- le moyen de liaison tarable comme tout système entre deux ensembles ayant la capacité de se rompre ou de garder une liaison élastique entre les dits ensembles lors d'efforts exercés entre les deux ensembles, la mobilité entre les deux ensembles pouvant être limitée par des moyens de butées afin d'éviter des mouvements dans des amplitudes indésirables.
- le pivot: tout moyen de liaison entre deux éléments du type système mâle-femelle à portée et (ou) guidage cylindrique.

Il est connu suivant le brevet français 89 05192 un système de sécurité, par un moyen de liaison intermédiaire entre deux ensembles: corps et support du corps, relié respectivement à chacun d'eux par un pivot opérant suivant deux directions: l'une parallèle au soc, l'autre perpendiculaire à ce dernier. Les positions des deux axes pivots limitent la direction suivant laquelle le corps doit s'échapper en fonction de la position de l'obstacle et entraînent une duplication de toutes les pièces, augmentant le coût d'un tel système, et nécessitent respectivement pour chacun des deux ensembles (corps et support du corps) un moyen de liaison tarable avec le moyen de liaison intermédiaire.
Jusqu'à ce jour les systèmes de sécurité des charrues à corps symétriques présentent l'inconvénient d'avoir un seul axe, positionné horizontalement à 45° par rapport au sens d'avancement, pour les deux sens de labour. Au cours du pivotement du corps, des efforts de torsion obligent à des renforcements couteux.
Il est connu, suivant le brevet GB-A-2. 125663, deux techniques de sécurité appliquées spécifiquement à une dent de cultivateur ayant un plan de symétrie confondu avec le sens d'avancement. Les deux techniques utilisent une rotule (20) dont l'axe support est la seule connexion entre la partie fixe (10/21) et la partie mobile (17/21/25) (revendication 2, lignes 1 à 3 et revendication 3 ligne 4), la pièce (17) étant seulement une butée à chacune de ses extrémités. La première technique utilise la rotule et les butées, ce qui ne permet pas un pivotement vers l'arrière. L'effet de cette technique est très limité à l'inclinaison suivant l'un ou l'autre des deux axes (22). La technique ne permet pas une inclinaison simultanée par rapport aux deux axes. Suivant la deuxième technique avec le boulon de rupture (19) les deux axes sont inexistants dès que la sécurité opère, l'élément mobile ne pivote que par rapport au seul axe transversal qui supporte la rotule, c'est-à-dire vers l'arrière ("rearwardly") selon page 2 ligne 62. L'effet de la technique de la rotule, très limité, ne permet pas au soc, à lui seul, de remonter transversalement au dessus de l'obstacle.
La technique selon GB-A-2.125663 n'est pas applicable à un corps symétrique de charrue dont l'axe de la rotule serait positionné à 45° par rapport à l'avancement. Avec ou sans la rotule, le pivotement de la partie mobile serait trop éloigné de la direction d'avancement et les mêmes efforts de torsion qu'actuellement existeraient. Avec la rotule, l'effort constant sur le versoir appliqué à 45° maintiendrait constamment le versoir dans une mauvaise position et le labour serait inacceptable.

L'invention se propose d'offrir des possibilités répondant aux insuffisances ou inconvénients énumérés ci-dessus en proposant conformément à elle une solution et des modes plus particuliers suivant elle soit plus efficaces soit moins couteux tel:
- qu'un système de sécurité pour corps (1) de charrue à corps symétrique comportant un moyen de liaison intermédiaire (3) entre deux ensembles: corps (1) et support (2) du corps (1), relié respectivement à chacun d'eux par un pivot (4 et 5), ces derniers (4,5) ayant deux axes différents, axes combinés autorisant un large déport par oscillation du corps (1) ou de son support (2) autour du moyen (3), un moyen de liaison tarable (6) limitant l'oscillation entre corps (1) et support (2), le dit moyen de liaison tarable (6), pouvant être unique, par exemple boulon d'arrachement ou galet à réenclenchement pour les deux sens de labour, reliant directement ou indirectement (sans prendre appuis sur (3)) les deux ensembles (1,2) supports respectifs de chacun des pivots (4,5), de sorte à libérer le mouvement entre le corps (1) et son support (2) lors de la rencontre d'un obstacle autour d'au moins un des deux axes des pivots (4,5) du moyen intermédiaire,
- que le moyen de liaison (3) entre le support (2) du corps (1) et la poutre porte-corps incluant deux pivots (4,5), aie les deux axes des deux pivots (4,5) selon des modes préférés de l'invention :
   - du type croisillon de cardan,
   - situés dans un même plan, suivant d'autres modes préférés de l'invention: horizontal ou dans deux plans horizontaux distincts ou sensiblement confondus, un moyen tarable (6) limitant le pivotement des pièces articulées entre elles de sorte que le moyen tarable soit soumis sensiblement aux mêmes contraintes dans les deux sens A₁,A₂ de labour,
   - chaque axe pouvant être perpendiculaire à un sens d'avancement,
   - chaque axe pouvant être à 90° l'un de l'autre,
   - la bissectrice des deux axes pouvant être perpendiculaire à l'arète du soc,
- qu'un moyen de liaison tarable (6) situé ou traversant l'un des espaces formé par la rencontre de deux plans passant par les deux axes pivots (4,5) et traversé par le plan vertical de symétrie (7) du versoir,
- qu'un des ensembles soit composé de deux éléments supérieur (8) et inférieur (9), reliés entre eux par un pivot perpendiculaire (10) ou parallèle (14) à l'arète horizontale du soc (15), et maintenus entre eux par un moyen de liaison tarable(11,17),
- qu'un des ensembles soit composé de deux éléments supérieur (8) et inférieur (9): reliés entre eux par un moyen de liaison intermédiaire (18), relié respectivement à chacun d'eux par un pivot (12,13), un moyen tarable maintenant les éléments solidaires.

Conformément à elle l'invention est exposée ci-après, la lecture des descriptions et des dessins suivants montre à titre d'exemples non limitatifs un mode de réalisation des divers éléments dans le cadre de l'invention.

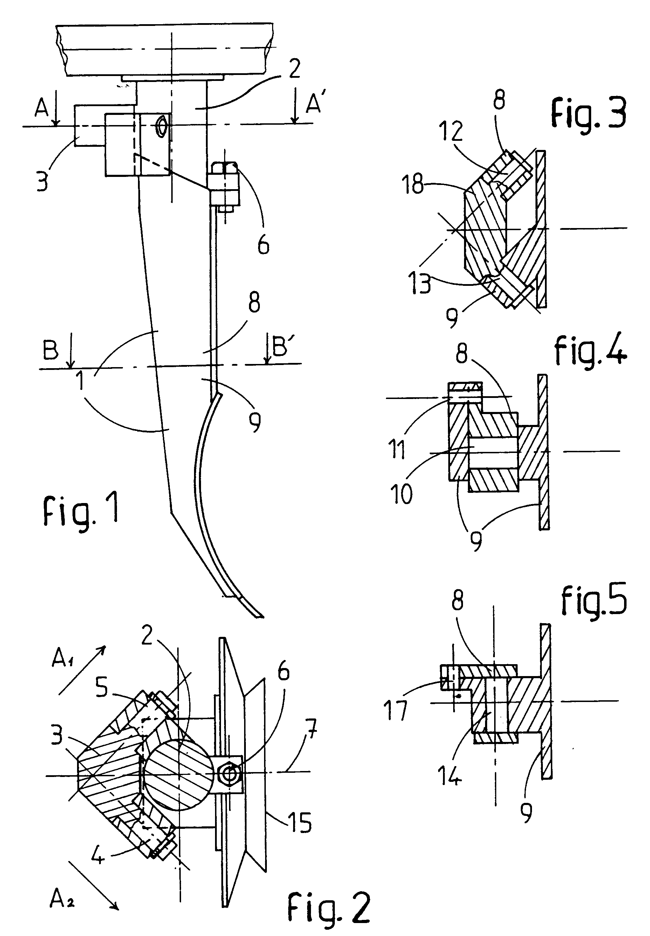

La figure 1 correspond à un système de sécurité suivant l'invention incluant un seul élément de tarage.
L'ensemble constitué selon ce mode comprend un moyen de liaison (3) incluant deus axes combinés, un premier axe (5) relié par son (ses) palier(s)avec le support (2) du corps (1), ce dernier muni ou non d'un pivot avec la poutre, un second axe (4) relié par son (ses) palier (s) avec le corps (1).
Un système de tarage tel qu'un boulon d'arrachement (6) assurant la liaison entre le support (2) et le corps (1) afin de limiter la mobilité entre eux, lors du labour sans rencontre d'obstacle.
La figure 2 représente la coupe AA'. Trois variantes sont représentées par la coupe effectuée à hauteur de BB':
- figure 3: selon un deuxième mode de l'invention, un deuxième moyen de liaison (18) du même type que 3 peut être positionné entre le premier et le corps (1) alors dénommé (9) ou entre le premier et le support (2) du corps (1), relié à l'un d'eux par un élément ou pièce, constituant un troisième ensemble intermédiaire (8), articulé avec les ensembles extrêmes support (2) et corps (9) par le deuxième pivot laissé libre de chaque croisillon, les mouvements du troisième ensemble étant limités par un moyen tarable (16). Ce moyen tarable, selon des modes particuliers, pouvant être relié soit directement du premier (ou support (2)) au troisième (ou corps (9)) soit du premier (le support (2)) au deuxième (8) (le troisième ensemble intermédiaire) , du second (8) (le troisième ensemble intermédiaire) au troisième (le corps (9)), individuellement ou en combinaison entre eux, afin de permettre le retour du corps (9) en position de travail après échappement de l'obstacle (deuxième mode).
- figure 4: selon un troisième mode de l'invention, la liaison entre les ensembles (8) et (9) est constituée par un pivot (10) dont l'axe est perpendiculaire à l'arète horizontale du soc, un moyen tarable 11 assurant la liaison rompable entre les deux ensembles.
- figure 5: selon un quatrième mode de l'invention, la liaison entre les ensembles (8) et (9) est constituée par un pivot (14) dont l'axe est parallèle à l'arête horizontale du soc, un moyen tarable (17) assurant la liaison rompable entre les deux ensembles.

Le fonctionnement de l'ensemble est le suivant :
Dans le cas du premier mode, le moyen de tarage opère avec la rupture du boulon lors de la rencontre du corps (1) avec un obstacle, ce qui permet au corps (1) d'échapper vers l'arrière suivant toutes les directions avec le concours du pivotement:
- du croisillon (moyen de liaison) autour de l'axe le reliant au support (2) du corps (1),
- du corps (1) autour de l'axe le reliant au croisillon,
- conjugué autour des deux axes,
suivant les composantes de la force exercée par l'obstacle sur le versoir.
Dans le cas du deuxième mode, le fonctionnement est identique, la combinaison des deux croisillons et du moyen tarable assurant l'échappement, puis le retour du système en position stable .
Selon l'invention l'appui, entre les deux ensembles (support (2) du corps (1), corps (1)) ou (troisième ensemble intermédiaire (8), corps (9)) ou (support (2), troisième ensemble intermédiaire (8)) ou éléments, faisant office de buté pour limiter la course vers l'avant, de l'ensemble situé en dessous du premier moyen de liaison ou, s'il est combiné avec le premier, du second moyen de liaison par rapport à celui situé au dessus, est dans un espace situé en avant du plan parallèle à l'arète du soc horizontale passant par le point d'intersection des deux axes des axes pivots (4,5) du premier moyen de liaison ou du second, selon un mode préféré de l'invention l'appui est dans l'espace compris entre les deux plans verticaux passant respectivement par chacun des axes du premier moyen de liaison ou du second, et, selon un autre mode préféré de l'invention, traversé par le plan vertical de symétrie du versoir, de part et (ou) d'autre du point d'intersection des deux axes du premier moyen de liaison ou du second.

## Revendications

1. Système de sécurité pour corps (1) de charrue à corps symétrique comprenant deux parties, l'une fixe (2) solidaire du bâti, l'autre mobile (1) recevant le corps, reliées entre elles directement d'une part par un moyen tarable (6) et d'autre part par deux axes-pivots (4,5) caractérisé en ce que les deux axes sont solidaires l'un de l'autre, en formant entre eux un angle, l'un pivotant autour de pivot(s) solidaire(s) de la partie fixe (2), l'autre recevant la partie mobile (1) de sorte que sous l'effet d'une surcharge le corps soit libre de pivoter simultanément par rapport aux deux axes.

2. système de sécurité selon la revendication 1 caractérisé en ce que les deux axes pivots (4,5) sont situés sensiblement dans un même plan de sorte à ce que le moyen tarable (6) soit soumis sensiblement aux mêmes contraintes dans les deux sens de labour.

3. système de sécurité selon l'une quelconque des revendications 1 et 2 caractérisé en ce que les deux axes des pivots (4,5) sont situés sensiblement dans un même plan horizontal.

4. système de sécurité selon l'une quelconque des revendications 1 à 3 caractérisé en ce que respectivement chacun des deux axes des pivots (4,5) est disposé sensiblement perpendiculairement à un des deux sens d'avancement (A₁,A₂) .

5. système de sécurité selon l'une quelconque des revendications 1 à 4 caractérisé en ce que le moyen tarable (6) traverse l'un des espaces formé par la rencontre de deux plans passant par les deux axes pivots (4,5) et traversé par le'plan vertical de symétrie (7) du versoir.

6. système de sécurité selon la revendications 1 caractérisé en ce qu'un des ensembles (corps (1) ou support (2)) est composé de deux éléments supérieur (8) et inférieur (9), reliés entre eus par un axe pivot (10, 14), et maintenus entre eux par un moyen de liaison tarable (11,17).

7. système de sécurité selon la revendication 1 caractérisé en ce qu'un des ensembles (corps (1) ou support (2)) est composé de deux éléments (8,9) reliés entre eux par un moyen de liaison intermédiaire (18), relié respectivement à chacun des deux éléments (8,9) par un par un pivot (12,13), un moyen tarable (16) maintenant les éléments solidaires.

8. système de sécurité selon la revendication 1 caractérisé en ce que l'appui, entre les deux ensembles (support (2) du corps (1), corps (1)) ou (troisième ensemble intermédiaire (8), corps (9)) ou (support (2), troisième ensemble intermédiaire (8)) ou éléments, faisant office de buté pour limiter la course vers l'avant, de l'ensemble situé en dessous du premier moyen de liaison ou, s'il est combiné avec le premier, du second moyen de liaison par rapport à celui situé au dessus, est dans un espace situé en avant du plan parallèle à l'arète du soc horizontale passant par le point d'intersection des deux axes des axes pivots (4,5) du premier moyen de liaison ou du second.

9. système de sécurité selon les revendications 6 et 7 caractérisé en ce que le moyen tarable, peut être relié soit directement du premier (ou support (2)) au troisième (ou corps (9)) soit du premier (le support (2)) au deuxième (8) (le troisième ensemble intermédiaire) , du second (8) (le troisième ensemble intermédiaire) au troisième (le corps (9)), individuellement ou en combinaison entre eux, afin de permettre le retour du corps (9) en position de travail après échappement de l'obstacle.

## Claims

1. Safety system for a plough body (1),with a symmetrical body, comprising two parts, one a fixed part (2) integral with the frame arid the other a movable part (1) accommodating the body ,directly interconnected both by a calibratable means (6) on the one hand and by two pivot shafts(4,5)on the other ,characterized by the fact that the two shafts are integral with each other, forming an angle between them,one of them pivoting about pivot(s)integral with the fixed part (2) and the other accomodating the movable part(1),in such a manner that under the effect of an excess load the body will be free to pivot simultaneously in respect of the two shafts.

2. Safety system in accordance with Claim 1,characterized by the fact that the two pivot shafts(4,5)are situated substantially in one and the same plane, in such a way that the calibratable mean(6) is subjected substantially to the same stresses in two directions of ploughing.

3. Safety system in accordance witheither of Claims 1,2,characterized by the fact that the two pivot shafts(4,5)are situated substantially in one and the same horizontal plane.

4. Safety system in accordance with any one of Claim 1-3,characterized by the fact that the two pivot shafts(4,5)are situated perpendicularly to the two respective directions of advance(A₁,A₂).

5. Safety system in accordance with eitherof Claims 1-4 ,characterized by the fact that the calibratable mean(6) traverses one of the spaces formed by the contact between two planes passing through the two pivot shafts(4,5)and traversed by the vertical plane of symmetry of the mould board.

6. Safety system in accordance with Claim1,characterized by the fact that one of the assemblies(body (1) or support (2) ) consists of two elements, upper(8)and lower(9),interconnected by a pivot shaft(10,14)and secured to each other by a calibratable connecting means(11,17).

7. Safety system in accordance withClaim1,characterized by the fact that one of th assemblies(body (1) or support(2) ) consists of two elements(8,9)interconnected by an intermediate connecting means (18),connected respectively to each of the two elements(8,9) by a pivot(12,13), the elements being secured to each other by a calibratable element(16).

8. Safety system in accordance with Claim 1,characterized by the fact that the support, between the two assemblies(support(2) of the body (1) ) or (third intermediate assembly (8) ), body (9) ) or (support(2),third intermediate assembly (8) ) or elements,functioning as a stop for limiting the forward travel,of the assembly situated below the first connection means, or, if it is combined with the first, of the second connection means in respect of that situated above, is in a space situated farther forward thanthe plane parallel to the edge of the horizontal ploughshare passing throughthe intersection point of the two axes of the pivot shafts(4,5)of the first connection means or of the second.

9. Safety system in accordance with Claims 6 and 7, characterized by the fact that the calibratable means canbe connected directly from the first(or support (2) ( to the third or body (9) ) or from the first (the support (2) ) to the second(8) (the third intermediate assembly ) , fromthe second (8) (the third intermediate assembly)to the third(the body (9) ),individually or in combination with one another,inorder to enable the body(9)to return to the operating position after the escape of the obstacle.

## Patentansprüche

1. Sicherheitssystem für Körper (1) von symmetrische Pflugkörpern bestehend aus zwei Teilen, von denen der eine feststehende (2) mit dem Rahmen fest verbunden ist und der andere bewegliche (1) den Körper aufnimmt, wobei diese einerseits direkt durch ein Überlastschutzmittel (6) und andererseits durch zwei Achsbolzen (4, 5) miteinander verbunden sind, dadurch gekennzeichnet, daß die beiden Achsen zueinander unbeweglich sind und einen Winkel zueinander einschließen, wobei der eine Bolzen um mit dem feststehenden Teil (2) feste Drehachse(n) drehbar ist, und der andere den beweglichen Teil (1) derart aufnimmt, daß unter der Wirkung einer Überbelastung der Körper sich frei gleichzeitig um die beiden Achsen drehen kann.

2. Sicherheitssystem nach Anspruch 1, dadurch gekennzeichnet, daß die beiden Achsbolzen (4, 5) im wesentlichen derart in der gleichen Ebene angeordnet sind, daß das Überlastschutzmittel (6) im wesentlichen den gleichen Belastungen in den beiden Pflugrichtungen unterworfen ist.

3. Sicherheitssystem nach einem der Ansprüche 1 und 2, dadurch gekennzeichnet, daß die beiden Achsen der Bolzen (4, 5) im wesentlichen in der gleichen horizontalen Ebene angeordnet sind.

4. Sicherheitssystem nach einem der Ansprüche 1 bis 3, dadurch gekennzeichnet, daß jeweils jede der Achsen der Bolzen (4, 5) im wesentlichen senkrecht zu einem der beiden Vorschubrichtungen (A1, A2) angeordnet ist.

5. Sicherheitssystem nach einem der Ansprüche 1 bis 4, dadurch gekennzeichnet, daß das Überlastschutzmittel (6) einen der Räume überspannt, welche durch das Zusammentreffen der beiden Ebenen gebildet werden, die durch die beiden Achsbolzen (4,5) verlaufen und von der vertikalen Symmetrieebene (7) des Streichbleches überquert wird.

6. Sicherheitssystem nach Anspruch 1, dadurch gekennzeichnet, daß eine der Einheiten (Körper (1) oder Stütze (2)) aus zwei Elementen, einem oberen (8) und einem unteren (9), zusammengesetzt ist, welche untereinander durch einen Achsbolzen (10, 14) verbunden sind, und zwischen diesen durch ein Überlastschutzverbindungsmittel (11,17) gehalten ist.

7. Sicherheitssystem nach Anspruch 1, dadurch gekennzeichnet, daß eine der Einheiten (Körper (1) oder Stütze (2)) aus zwei Elementen (8, 9) gebildet ist, die miteinander durch ein Zwischenverbindungsmittel (18) verbunden sind, welches jeweils mit jedem der beiden Elemente (8,9) durch einen Bolzen (12, 13) verbunden ist, wobei ein Überlastschutzmittel (16) die feststehenden Elemente hält.

8. Sicherheitssystem nach Anspruch 1, dadurch gekennzeichnet, daß die Abstützung zwischen den beiden Einheiten (Stütze (2) des Körpers (1), Körper (1)) oder (dritte Zwischeneinheit (8), Körper (9)) oder ( Stütze (2), dritte Zwischeneinheit (8)) oder Elemente, die Funktion eines Anschlages erfüllen, um den Hub nach vorne zu begrenzen, die Einheit, die unterhalb des ersten Verbindungsmittels angeordnet ist oder, wenn sie mit dem ersten kombiniert ist, dem zweiten Verbindungsmittel gegenüber jenem, das darüber angeordnet ist, in einem Bereich ist, welcher vor einer Ebene gelegen ist, die parallel zur horizontalen Scharkante und durch den Schnittpunkt der beiden Achsen der Achsbolzen (4,5) des ersten oder zweiten Verbindungsmittels verläuft.

9. Sicherheitssystem nach einem der Ansprüche 6 und 7, dadurch gekennzeichnet, daß das Überlastschutzmittel direkt verbunden sein kann entweder direkt vom ersten (oder Stütze (2)) zum dritten (oder Körper (9)) oder vom ersten (die Stütze (2)) zum zweiten (8) (die dritte Zwischeneinheit), vom zweiten (8) (die dritte Zwischeneinheit) zum dritten (der Körper (9)), einzeln oder in Kombination zwischen diesen, um das Zurückführen des Körpers (9) in die Arbeitsstellung nach Beseitigung des Hindernisses zu gestatten.
